# EUROPÄISCHE PATENTSCHRIFT

(11) **EP 3 485 551 B1**
(45) Veröffentlichungstag und Bekanntmachung des Hinweises auf die Patenterteilung: **12.01.2022**
(21) Anmeldenummer: 16760478.4
(22) Anmeldetag: 02.09.2016
(51) Int. Cl.: H02J 3/18, H02J 3/24

(54) **EINRICHTUNG ZUR DYNAMISCHEN STABILISIERUNG DER ENERGIEÜBERTRAGUNG ÜBER EINE ELEKTRISCHE LEITUNG**
DEVICE FOR THE DYNAMIC STABILIZATION OF THE ENERGY TRANSMISSION VIA AN ELECTRICAL LINE
DISPOSITIF DE STABILISATION DYNAMIQUE DE LA TRANSMISSION D'ÉNERGIE PAR UNE LIGNE ÉLECTRIQUE

(43) Veröffentlichungstag der Anmeldung: 22.05.2019
(73) Patentinhaber: Siemens Energy Global GmbH & Co. KG, 81739 München (DE)
(72) Erfinder: KRAJISNIK, Nemanja, 90443 Nürnberg (DE); SPAHIC, Ervin, 91052 Erlangen (DE)
(86) Internationale Anmeldenummer: PCT/EP2016/070736
(87) Internationale Veröffentlichungsnummer: WO 2018/041363

(56) Entgegenhaltungen:
- WO-A1-03/098771
- WO-A2-2013/153075
- DE-A1- 19 814 767
- DE-A1-102014 006 806
- US-A- 5 513 090
- LI R ET AL: "CONTROL CONCEPT OF UNIFIED POWER LINE CONDITIONER", 2000 IEEE POWER ENGINEERING SOCIETY. WINTER MEETING. CONFERENCE PROCEEDINGS. SINGAPORE, JAN. 23-27, 2000; [IEEE POWER ENGINEERING SOCIETY WINTER MEETING], NEW YORK, NY : IEEE, US, 23. Januar 2000 (2000-01-23), Seiten 2594-2599, XP000967184, ISBN: 978-0-7803-5936-9

## Beschreibung

Die Erfindung betrifft eine Einrichtung zur dynamischen Stabilisierung der Energieübertragung über eine elektrische Leitung beim Auftreten von Schwankungen des Wirkleistungsflusses, insbesondere bei Auftreten von Instabilitäten, gemäß dem Oberbegriff des Anspruchs 1.

Die elektrische Energieübertragung für größere Versorgungsgebiete erfolgt bekanntermaßen mittels Übertragungsnetzen, die aus miteinander verbundenen Übertragungsleitungen gebildet sind. Sind die Versorgungsgebiete durch hohe Erzeugung und Lasten stark unterschiedlich geprägt und durch relativ schwache Interkonnektoren (z. B. kleine Spannungsebenen oder/und lange Leitungen) verbunden, ist die dynamische Stabilität (Klein-Signal-Stabilität) gefährdet, d.h. es kann zu (elektromechanischen) Schwingungen zwischen den verbundenen Versorgungsgebieten kommen. Damit können Auslösungen von Schutzgeräten und Ausfälle von Generatoren verbunden sein.

Um dies zu verhindern, werden Betriebsmittel basierend auf selbstgeführten Umrichtern in Kombination mit passiven Komponenten eingesetzt, die in Serie mit der kritischen Übertragungsleitung zugeschaltet werden. Bei den Betriebsmitteln kann es sich um einfache oder von Thyristoren geregelte netzgeführte Kondensatorbänke (TCSC: thyristor controlled series capacitor) handeln. Der Einfluss dieser Betriebsmittel verbessert wirksam die dynamische Stabilität, hat aber den Nachteil, wegen der passiven Elemente stark von der Netzspannung und dem Strom abhängig zu sein.

Aus der Offenlegungsschrift DE 198 14 767 A1 ist eine leistungselektronische Schaltungsanordnung zur Kompensation von Netzstörungen und Spannungseinbrüchen bekannt. Dabei wird eine von einem Stromrichter bereitgestellte Wechselspannung mittels eines Einspeisetransformators in eine dreiphasige Spannungsversorgungsleitung eingespeist.

Aus dem Artikel "Control Concept of Unified Power Line Conditioner" von Li, R. et al, 2000 IEEE Power engineering society, winter meeting, New York, Seiten 2594-2599, XP000967184, ISBN: 978-0-7803-5936-9, ist ein Unified Power Line Conditioner (UPLC) mit aktiven, seriell und parallel geschalteten Filtern bekannt. Damit können Power-Quality-Probleme in Verteilungsnetzen gelöst werden.

Das Patent US 5,513,090 offenbart ebenfalls einen Power Line Conditioner mit einem aktiven und einem passiven Filter, der mit einem Verteilungsnetz verbunden ist.

Aus der internationalen Patentanmeldung WO 2013/153075 A2 ist ein Leistungskompensator bekannt, mit dem eine Spannung an einer Energieübertragungsleitung kompensiert werden kann.

Die Aufgabe der Erfindung ist es, eine Einrichtung zur dynamischen Stabilisierung der Energieübertragung über eine elektrische Leitung vorzuschlagen, die unabhängig von der Netzspannung und dem Strom ist.

Die Lösung ist durch die Merkmale des Anspruchs 1 gegeben; die Unteransprüche stellen vorteilhafte Ausgestaltungen dar.

Die Lösung sieht vor, dass ein Serien-Transformator vorhanden ist, dessen Primärwicklung an einer Kopplungsstelle, die sich zwischen der ersten und zweiten Stelle befindet, an die Leitung angekoppelt ist, dass ein Stromrichter an die Sekundärwicklung des Serien-Transformators angeschlossenen ist, der einen Gleichstromkreis mit einem Energiespeicher aufweist, dass der Stromrichters unter Laden und Entladen des Energiespeichers zum Ausregeln über den Serien-Transformator jeweils eine gegensteuernde dritte Wechselspannung in die Leitung einkoppelt, welche nur die Schwankungen der SpannungswinkelDifferenz jeweils ausregelt. Das hier vorgeschlagene Betriebsmittel basiert auf selbstgeführten Umrichtern VSC (Voltage Source Converter) in Kombination mit einem Energiespeicher und dämpft aktiv auftretende Schwingungen, insbesondere bei Auftreten von Instabilitäten. Dies ermöglicht Spannungsregelungspotential, welches unabhängig vom Leitungsstrom ist. An einer Übertragungsleitung flexiblere und schnellere Regelung und damit eine deutlich schnellere und effektivere Dämpfung von den Leistungsoszillationen im Vergleich zu netzgeführten Kondensatorbänken gewährleistet.

Die Erfindung wird nachfolgend anhand einer Zeichnung näher beschrieben. Es zeigen
- Fig. 1: schematisch die Energieübertragung über eine elektrische Leitung mit einer Einrichtung zur dynamischen Stabilisierung,
- Fig. 2: ein Vektordiagramm mit den Wechselspannungen der Energieübertragung gemäß Fig. 1 bei stabilem Wirkleistungsfluss,
- Fig. 3: ein Vektordiagramme mit den Wechselspannungen der Energieübertragung gemäß Fig. 1 bei schwankendem Wirkleistungsfluss und gesteuertem Laden des Energiespeichers des Stromrichters der Einrichtung,
- Fig. 4: ein Vektordiagramme mit den Wechselspannungen der Energieübertragung gemäß Fig. 1 bei schwankendem Wirkleistungsfluss und gesteuertem Entladen des Energiespeichers des Stromrichters der Einrichtung,
- Fig. 5: den Wirkleistungsfluss und die im Energiespeicher gespeicherte Leistung der Energieübertragung gemäß Fig. 1 über der Zeit in einem gemeinsamen Diagramm und
- Fig. 6: eines von mehreren Vollbrückenmodulen, die elektrisch in Reihe geschaltet den Stromrichter bilden.

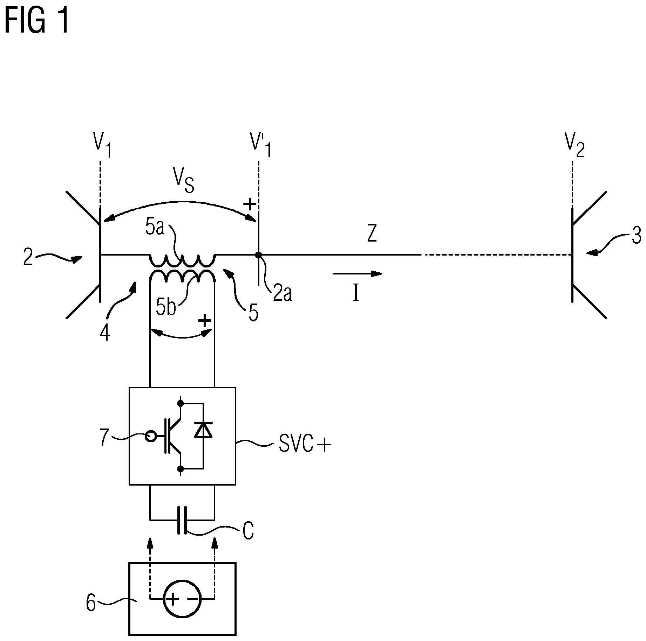

Fig. 1 zeigt eine schematische Darstellung einer Leitung (Übertragungsleitung) 1, die zur Energieübertragung innerhalb eines dreiphasigen Übertragungsnetzes gehört, das aus miteinander verbundenen Leitungen und angeschlossenen Verbrauchern gebildet ist.

Die elektrische Energie wird an einer einspeisenden Stelle (Einspeisestelle) 2, hier an einem Ende der Leitung 1, in die Leitung 1 eingekoppelt und an einer entnehmenden Stelle (Entnahmestelle) 3 entnommen, hier beispielhaft am anderen Ende der Leitung 1. An der einspeisenden Stelle 2 liegt dazu eine (erste) Wechselspannung V1, die Netzspannung, mit einem (ersten) Spannungswinkel d1 an, der wie alle anderen nachfolgend genannten Spannungswinkel jeweils auf den Wechselstrom I bezogen ist, welcher über die Leitung 1 fließt. An der entnehmenden Stelle 3 ist eine (zweite) Wechselspannung V2 mit einem (zweiten) Spannungswinkel d2 vorhanden, die quasi an dieser Stelle 3 abfällt. Der Zusammenhang zwischen beiden Wechselspannungen V1, V2, dem Wechselstrom I und der Leitung 1 ist durch den (komplexen) Leitungswiderstand Z gegeben.

An einer Kopplungsstelle 4 ist die Primärwicklung 5a eines Serientransformators 5 an die Leitung 1 angekoppelt, die zwischen der ersten und zweiten Stelle 2, 3 befindet, in Fig. 1 mehr auf Seiten der entnehmenden Stelle 3, und vom Wechselstrom I durchflossen ist.

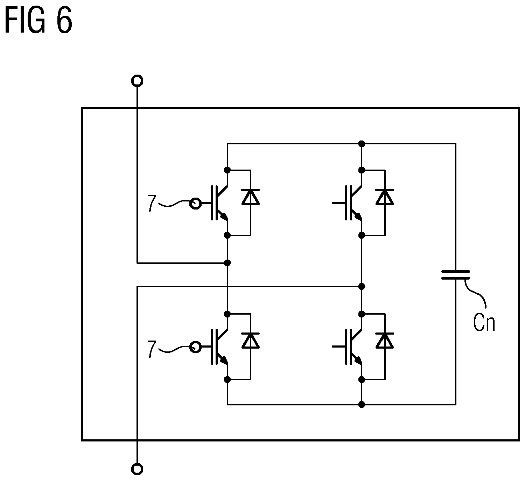

Ein Stromrichter SVC PLUS (SVC: Voltage Source Converter; im Folgenden mit SVC+ bezeichnet) ist an die Sekundärwicklung des Serientransformators 5 angekoppelt. Der Stromrichter SVC+ weist einen Gleichstromkreis DC mit einem Energiespeicher 6 auf, der als Kondensator ausgebildet sein kann und deshalb in Fig. 1 schematisch durch einen Kondensator C dargestellt ist. Der Stromrichter SVC+ ist als modularer Mehrstufenumrichter ausgebildet, bei dessen elektrisch in Reihe geschalteten Modulen es sich um Vollbrückenmodule handelt (s. Fig. 6).

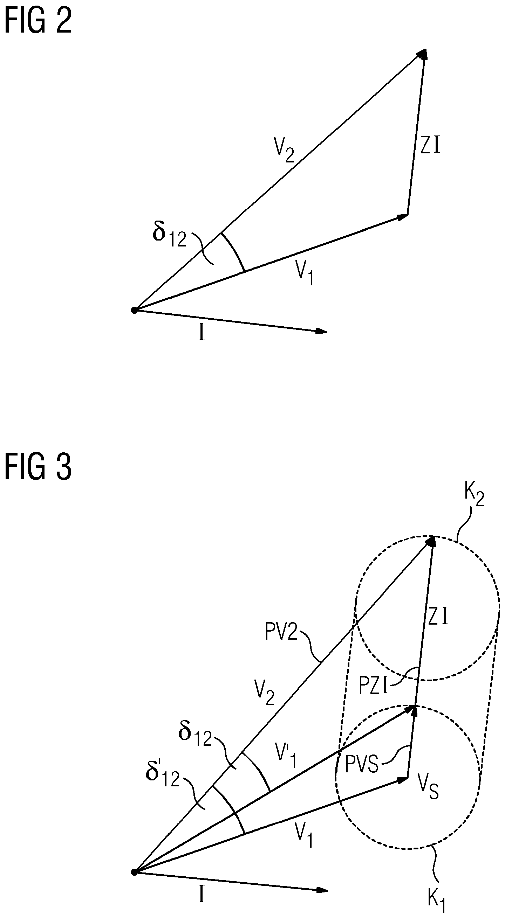

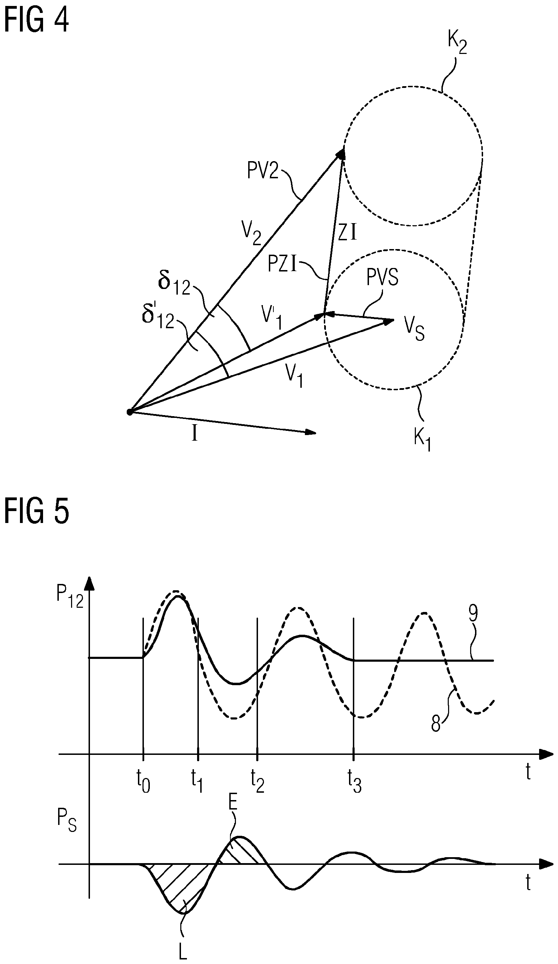

Mit Hilfe des Stromrichters SVC+ wird eine (dritte) Wechselspannung VS mit einem (dritten) Spannungswinkel ds über die Sekundärwicklung 5b des Serientransformators 5 in die Leitung 1 eingekoppelt, wie in Fig. 1 schematisch dargestellt. Dadurch liegt an einer dritten Stelle 2a (rechts neben dem Serientransformator 5) eine daraus resultierende Wechselspannung V1' an (s. Fig. 3 und Fig. 4).

Zur Einstellung der Amplitude (Vs) und des Spannungswinkels ds der Wechselspannung VS wird ein entsprechendes Steuersignal S an den Ansteuereingang 7 gegeben, das anhand der Wechselspannungen V1, V2 und der Spannungswinkel d1, d2 gebildet wird.

Fig. 2 zeigt die beiden Wechselspannungen V1, V2 mit der Spannungswinkel-Differenz d12 beispielhaft in einem Vektordiagramm zu einem Zeitpunkt t0, zu dem keine dritte Wechselspannung Vs in die Leitung 1 eingekoppelt wird, da der Wechselstrom I im Wesentlichen stabil ist.

Fig. 3 zeigt die beiden Wechselspannungen V1, V2 in einem Vektordiagramm zu einem Zeitpunkt t1 beim Auftreten einer Instabilität. Die Instabilität ist hier beispielhaft zum Zeitpunkt t1 mit einer Spannungswinkel-Differenz d12' zwischen den beiden Wechselspannungen V1, V2 verbunden, die größer ist als die Spannungswinkel-Differenz d12 zum Zeitpunkt t0, also vor dem Auftreten der Instabilität.

Die Wechselspannung Vs mit dem Spannungswinkel d3 wird zur Kompensation der vergrößerten Spannungswinkel-Differenz d12' in die Leitung 1 eingekoppelt, welche die Änderung der Spannungswinkel-Differenz d12'-d12 entsprechend ausregelt (im Wesentlichen kompensiert).

Aus Fig. 3 ist ersichtlich, dass während des Speicherbetriebs nicht nur der Spannungswinkeldifferenz d12 beeinflusst wird, sondern auch der Spannungswinkel d2 der Wechselspannung V2. Die Kontrolle der Spannungswinkeldifferenz d12 und des Spannungswinkels d2 bietet die Möglichkeit, den Wirkleistungsfluss P12 und Blindleistungsfluss auf der Leitung 1 unabhängig voneinander zu steuern.

Aufgrund des aktiv steuerbaren Elements in Form des Gleichstromkreises DC mit dem Energiespeicher 6 lässt sich der Spannungswinkel d3 der Wechselspannung Vs durch entsprechend gesteuertes Laden bzw. Entladen des Energiespeichers 6 zwischen 0 Grad und 360 Grad einstellen.

Der Energiespeicher 6 kann also aktiv eine Ladungsmenge Q aus der Leitung 1 entnehmen und auch wieder an die Leitung 1 abgeben. Bei einer gegebenen Wechselspannung Vs - wie in Fig. 3 durch einen Pfeil PVs mit entsprechend gleichbleibender Pfeillänge dargestellt - entspricht einer Änderung des dritten Spannungswinkels d3 einer Drehung des Pfeils PVs um den Mittelpunkt des eingezeichneten Kreises K1, d.h. die Pfeilspitze des Pfeils PVs bewegt sich auf dem Kreis K1. Synchron bewegen sich die Pfeilspitzen der Pfeile PV2 und PZI auf dem oberen Kreis K2.

Ein Beispiel für ein vom Stromrichter SVC+ gesteuertes Laden des Energiespeichers 6 ist in Fig. 3 gezeigt.

Fig. 4 zeigt im Unterschied zu Fig. 3 ein Beispiel für ein vom Stromrichter SVC+ gesteuertes Entladen des Energiespeichers 6.

Fig. 5 stellt in einem gemeinsamen Diagramm den Wirkleistungsfluss P12 und die im Energiespeicher 6 gespeicherte Leistung Ps (Pstorage) über der Zeit t dar. Der Wirkleistungsfluss P12 ist bis zum Zeitpunkt t0 im Wesentlichen stabil. Zum Zeitpunkt t0 kommt es aufgrund von Instabilitäten zu Schwankungen des Wirkleistungsflusses P12 (gestrichelte Kurve 8 ohne aktivem oder zugeschaltetem Stromrichter SVC+), die hier beispielhaft - wie häufig im praktischen Betrieb - schwingungsförmig (Leistungsoszillationen) verlaufen. Schaltet man den Stromrichter SVC+ zu, ergibt sich die Kurve 9, welche hier beispielhaft die Form einer gedämpften Schwingung hat, wobei der Wirkleistungsfluss P12 zum Zeitpunkt t1 bereits wieder stabil ist, also den Wert hat, den er zum Zeitpunkt t0 hatte, allerdings wegen der Ausregelung genaugenommen bis auf eine kleine und nicht weiter dargestellte Regelabweichung, die mit der Zeit t ebenfalls abklingt.

Die darunter in Fig. 5 über der Zeit t dargestellte im Energiespeicher 6 gespeicherte Leistung Ps zeigt die aktive Einflussnahme des Stromrichters SVC+ auf den Wirkleistungsfluss P12, d.h. der Stromrichter SVC+ koppelt jeweils unter Laden L und Entladen E des Energiespeichers 6 über den Serien-Transformator 5 die dritte Wechselspannung Vs in die Leitung ein, wobei er deren Spannungswinkel ds so einstellt, dass die Schwankungen der Spannungswinkel-Differenz d12 jeweils gegensteuernd ausgeregelt (gedämpft) werden, wie in Fig. 2 und 3 dargestellt. Bei angelegter erster Wechselspannung V1 mit einem Spannungswinkel d1 und unveränderter SpannungswinkelDifferenz d12 zum Zeitpunkt t3 (im Vergleich zum Zeitpunkt t0) ist der Wirkleistungsfluss P12 wieder unverändert stabil. Und das durch die aktive Einflussnahme in relativ kurzer Zeit im Vergleich zur Schwingungsdauer der schwingungsförmigen Schwankungen des Wirkleistungsflusses P12 aufgrund der Instabilität.

In Fig. 6 ist beispielhaft eines der Vollbrückenmodule gezeigt, die elektrisch in Reihe geschaltet den Stromrichter SVC+ bilden, wobei der Kondensator Cn des Vollbrückenmoduls eine Teilkapazität des in Fig. 1 schematisch als Kondensator C dargestellten Energiespeichers 6 bildet.

## Patentansprüche

1. Einrichtung zur dynamischen Stabilisierung der Energieübertragung über eine elektrische Leitung (1) beim Auftreten von Schwankungen des Wirkleistungsflusses (P12) wobei
a) an einer ersten Stelle (2) der Leitung (1) eine erste Wechselspannung (V1) mit einem ersten Spannungswinkel (d1) anliegt,
b) an einer in Richtung der Energieübertragung gesehen zweiten Stelle (3) der Leitung (1) eine zweite Wechselspannung (V2) mit einem zweiten Spannungswinkel (d2) vorhanden ist und
c) die Schwankungen des Wirkleistungsflusses (P12) mit den Schwankungen der Spannungswinkel-Differenz (d12) zwischen den beiden Stellen (2, 3) der Leitung (1) korrelieren, wobei ein Serien-Transformator (5) vorhanden ist, dessen Primärwicklung (5a) an einer Kopplungsstelle (4), die sich zwischen der ersten und zweiten Stelle (2, 3) befindet, an die Leitung (1) angekoppelt ist,
ein Stromrichter (SVC+) an die Sekundärwicklung (5b) des Serien-Transformators (5) angeschlossenen ist, der einen Gleichstromkreis (DC) mit einem Energiespeicher (C) aufweist, und
der Stromrichter (SVC+) unter Laden und Entladen des Energiespeichers (C) zum Ausregeln über den Serien-Transformator (5) jeweils eine gegensteuernde dritte Wechselspannung (Vs) mit einem dritten Spannungswinkel (ds) in die Leitung (1) einkoppelt,
**dadurch gekennzeichnet,**
**dass** der Stromrichter (SVC+) als modularer Mehrstufenumrichter ausgebildet ist, und die Module des Mehrstufenumrichters als Vollbrückenmodule ausgebildet und elektrisch in Reihe geschaltet sind.

## Claims

1. Device for dynamically stabilizing the transmission of energy via an electrical line (1) when fluctuations in the active power flow (P12) arise, wherein
a) a first AC voltage (V1) with a first voltage angle (d1) is present at a first point (2) on the line (1),
b) a second AC voltage (V2) with a second voltage angle (d2) is present at a second point (3) on the line (1), as seen in the direction of the transmission of energy, and
c) the fluctuations in the active power flow (P12) correlate with the fluctuations in the voltage angle difference (d12) between the two points (2, 3) on the line (1), wherein a series transformer (5) is present, the primary winding (5a) of which is coupled to the line (1) at a coupling point (4) that is between the first and second point (2, 3),
a converter (SVC+) is connected to the secondary winding (5b) of the series transformer (5) and has a DC circuit (DC) with an energy store (C), and
the converter (SVC+) couples a respective counteracting third AC voltage (Vs) with a third voltage angle (ds) into the line (1) via the series transformer (5) with charging and discharging of the energy store (C) for compensation purposes, **characterized**
**in that** the converter (SVC+) is designed as a modular multi-level converter, and the modules of the multi-level converter are designed as full-bridge modules and are electrically connected in series.

## Revendications

1. Dispositif de stabilisation dynamique du transport d'énergie par une ligne (1) électrique à l'apparition de fluctuations du flux (P12) de puissance réactive, dans lequel
a) en un premier point (2) de la ligne (1) s'applique une première tension (V1) alternative ayant un premier angle (d1) de tension,
b) en un deuxième point (3) de la ligne (1), considéré dans le sens du transport d'énergie, il y a une deuxième tension (V2) alternative ayant un deuxième angle (d2) de tension et
c) les fluctuations du flux (P12) de puissance réactive sont en corrélation avec les fluctuations de la différence (d12) d'angle de tension entre les deux points (2, 3) de la ligne (1), dans lequel il y a un transformateur (5) série dont l'enroulement (5a) primaire est connecté à la ligne (1) en un point (4) de connexion qui se trouve entre le premier et le deuxième point (2, 3),
un convertisseur (SVC+) est connecté à l'enroulement (5b) secondaire du transformateur (5) série, lequel a un circuit (DC) de courant continu ayant un accumulateur (C) d'énergie, et
le convertisseur (SVC+) injecte dans la ligne (1) tout en chargeant et déchargeant l'accumulateur (C) d'énergie, pour la régulation par l'intermédiaire du transformateur (5) série respectivement une troisième tension (Vs) alternative opposée ayant un troisième angle (ds) de tension,
**caractérisé**
**en ce que** le convertisseur (SVC+) est constitué sous la forme d'un onduleur modulaire à plusieurs étages et les modules de l'onduleur à plusieurs étages sont constitués sous la forme de modules en pont complet et sont montés électriquement en série.
